# EUROPEAN PATENT SPECIFICATION

(11) **EP 2 458 761 B1**
(45) Date of publication and mention of the grant of the patent: **31.07.2013**
(21) Application number: 10306313.7
(22) Date of filing: 29.11.2010
(51) Int. Cl.: H04J 14/02, H04Q 11/00

(54) **Optical packet switching node**
Optischer Paketvermittlungsknoten
Noeud de commutation de paquets optiques

(43) Date of publication of application: 30.05.2012
(73) Proprietor: Alcatel Lucent, 75007 Paris (FR)
(72) Inventor: Pointurier, Yvan, 91620 Nozay (FR); Simonneau, Christian, 91620 Nozay (FR); Chiaroni, Dominique, 91620 Nozay (FR); Antona, Jean-Christophe, 91620 Nozay (FR)
(74) Representative: Sciaux, Edmond

(56) References cited:
- EP-A1- 1 241 913
- WO-A1-02/09336
- CHIARONI D: "Optical Packet Add/Drop Multiplexers for packet ring networks", ECOC2008, ECOC, BRUSSELS, 21-25 SEP 2008, ECOC, BRUSSELS EXPO, BELGIUM, 21 September 2008 (2008-09-21), XP001524738, ISBN: 978-1-4244-2228-9

## Description

### Field of the invention

The invention relates to the technical field of optical communication systems employing a packet granularity.

### Background

Optical packet switching networks employing Wavelength Division Multiplexing (WDM) provide flexibility, high capacity and efficient use of the bandwidth through multiplexing techniques in both time and wavelength. An optical packet add and drop multiplexer (OPADM) for a WDM network makes it possible to perform fundamental functions such as optical packet insertion, optical packet extraction and transparent forwarding of transit traffic on each of a plurality of wavelength channels. The optical transparency of the transit path reduces dramatically the number of transponders required to make such equipment.

As a conventional Reconfigurable Optical Add Drop Multiplexer, an OPADM typically comprises an optical unit managing the transit traffic in the optical domain, dropping traffic to a drop module and adding traffic from an add module, and an electronic unit that comprises the add and drop modules and interfaces with client devices. An OPADM architecture was described in "Optical Packet Add/Drop Multiplexers for packet ring networks," Proceedings of ECOC 2008, Brussels Expo, Belgium, pp 103-106, XP001524738.

### Summary

In an embodiment, the invention provides a method for transmitting data frames in an optical packet switching network. The method comprises:
at a first network node, generating an optical packet comprising a payload encapsulating a plurality of data frames or fragments of data frames having a same format and generating control data associated to the optical packet, wherein the control data comprises format data indicating the format of the encapsulated data frames or fragments of data frames,
at a second network node, receiving the optical packet and the associated control data, demodulating the optical packet to obtain an electrical signal comprising the payload, and configuring an electronic switch as a function of the format data associated to the optical packet to transfer the electrical signal to a selected extraction module adapted to recover the data frames or fragments of data frames from the electrical signal.

Such a method makes it possible to use an optical packet switching network with different types of client traffic having different data frame formats, e.g. using different protocols in the client layer. By appropriately configuring the electronic switch as a function of the format data, a protocol demultiplexing function can be implemented so as to select an extraction module adapted to the encapsulated data frames of the optical packet being dropped.

In embodiments, the frame formats may be in accordance with a variety of standard protocols, e.g. all versions of the Internet Protocol, Frame Relay, Ethernet, SONET/SDH, OTN and others.

In embodiments, the method further comprises transmitting the optical packet transparently from the first network node to the second network node on a first wavelength channel and transmitting the control data associated to the optical packet from the first network node to the second network node on a second wavelength channel. The second wavelength channel may be a dedicated control channel, to offer a control plane independent from the data plane.

In an embodiment, the invention also provides an optical packet switching node comprising:
an input section for receiving optical packets, each optical packet comprising a payload encapsulating a plurality of data frames or fragments of data frames having a same format,
a controller adapted to receive control data associated to the optical packets, wherein the control data comprises format data indicating the format of the encapsulated data frames or fragments of data frames for each of the optical packets,
an output section for transmitting optical packets,
an optical transit section adapted to pass optical packets from the input section to the output section, and
an optical packet drop section including:
   an optical packet receiver connected to the input section and adapted to demodulate an optical packet to obtain an electrical signal comprising the payload,
   a plurality of extraction modules adapted to different data frame formats, and
   an electronic switch arranged between the optical packet receiver and the plurality of extraction modules,
   wherein the electronic switch is configurable by the controller as a function of the format data associated to the optical packet demodulated by the optical packet receiver to transfer the electrical signal to a selected extraction module adapted to recover the data frames or fragments of data frames from the electrical signal.

In an embodiment, the input section is adapted to receive the optical packets on a plurality of wavelength channels through a WDM link, the optical packet drop section further comprising a plurality of optical packet receivers adapted to demodulate optical packets on different wavelength channels.

In an embodiment, the optical packet receivers are wavelength-tunable.

In an embodiment, the node further comprises an optical packet add section including:
a frame encapsulation module adapted to generate a packet payload encapsulating a plurality of data frames or fragments of data frames having a same format,
and a control data generation module adapted to generate control data associated to the packet payload, wherein the control data comprises format data indicating the format of the encapsulated data frames or fragments of data frames, and
an optical transmitter adapted to transmit an optical packet comprising the packet payload to the output section.

In an embodiment, the optical packet transmitter is arranged on the first electronic board and the frame encapsulation module and the control data generation module are arranged on the at least one second electronic board.

In an embodiment, the node further comprises an electrical connection adapted to pass a packet payload from the optical packet drop section to the optical transmitter of the optical packet add section.

In an embodiment, the electrical connection comprises a switch having a first input connected to the electronic switch of the optical packet drop section and a second input connected to the frame encapsulation module of the optical packet add section.

In an embodiment, the output section is adapted to transmit the optical packets on a plurality of wavelength channels through a WDM link, the optical packet add section further comprising a plurality of optical packet transmitters adapted to generate optical packets on different wavelength channels.

In an embodiment, the optical packet transmitters are wavelength-tunable.

In an embodiment, the optical transit section comprises:
a coarse demultiplexer connected to the input section and adapted to separate the wavelength channels carrying the optical packets into a plurality of spectral groups,
for at least one of the spectral groups, a fine wavelength demultiplexer adapted to pass the respective wavelength channels of the corresponding spectral group to respective transit paths, a selective element cooperating with each transit path and switchable to selectively pass or block an individual optical packet carried on the corresponding wavelength channel,
optical combiners adapted to recombine the optical packets passed by the selective elements on the respective wavelength channels.

Such selective elements may be implemented in diverse manners, e.g. as semiconductor optical amplifiers (SOA) or optical gates of other types.

In an embodiment, the optical transit section further comprises:
a plurality of packet switching blocks connected to the coarse demultiplexer, each packet switching block being associated to one of the spectral groups and comprising the fine demultiplexer with the associated transit paths and selective elements and a fine wavelength multiplexer adapted to recombine the wavelength channels of the spectral group,
a coarse multiplexer arranged between the packet switching blocks and the output section and adapted to recombine the spectral groups.

In an embodiment, a packet switching block consists of a single photonic integrated circuit (PIC). PIC integration can render the packet switching block more compact.

In an embodiment, the selective element comprises a semiconductor optical amplifier arranged as an optical gate on the corresponding transit path.

In an embodiment, the node further comprises an optical receiver connected to the input section for receiving a control wavelength channel and demodulating the control data associated to the optical packets from the control wavelength channel.

Aspects of the invention are based on the idea of providing an optical packet switching network capable of transporting data from various client protocols in the optical packets. Further aspects of the invention stem from the observation that a modularity, resiliency and flexibility of the drop module can be improved by arranging client protocol-specific components on a separate electronic board from non client protocol-specific components. In the context of optical nodes, electronic boards are also referred to as linecards.

### Brief description of the drawings

These and other aspects of the invention will be apparent from and elucidated with reference to the embodiments described hereinafter, by way of example, with reference to the drawings.
Figure 1 is a functional representation of an optical ring network in which embodiments of the invention can be used.
Figure 2 represents a time-slotted WDM packet traffic that can be used in the network of Figure 1.
Figure 3 is a functional representation of an OPADM that can be used in the network of Figure 1, showing an optical unit of the OPADM.
Figure 4 is a functional representation of an OPADM that can be used in the network of Figure 1, showing an electronic unit of the OPADM.

### Detailed description of the embodiments

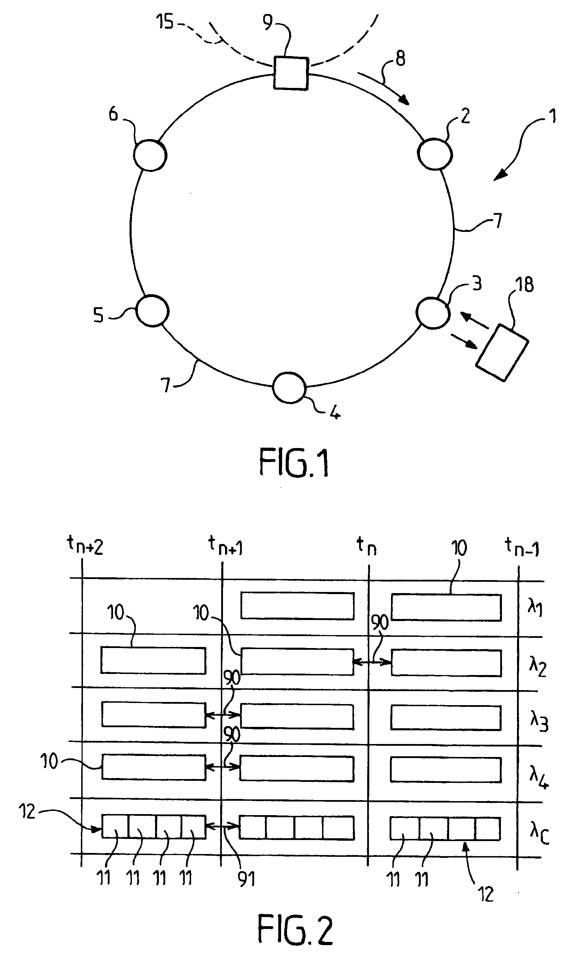

With reference to Figure 1, an optical ring network 1, which can be used in a metropolitan or access segment, comprises optical packet add-drop multiplexers (OPADM) 2, 3, 4, 5, 6 and a hub node 9 connected by optical links 7, e.g. optical fibers. Arrow 8 shows a direction of propagation of the optical packets. Alternatively, the ring could be bidirectional.

With reference to Figure 2, the ring network 1 is a time-slotted network where data is transmitted within fixed-duration packets 10 over the optical links 7. Data is transmitted within optical packets 10 carried on N wavelength channels. Although four channels λ1 to λ4, are illustrated for the sake of illustration, the number of channels can be much higher, as in standard frequency grids. The optical packets 10 are WDM-multiplexed over the optical links 7. To each optical packet 10 is associated a header 11 that contains the control data of the packet, including routing information e.g., the destination, and format information e.g., the client protocol being encapsulated. This information may be provided in the form of a numerical code similar to an Ethertype. Packets 10 are transmitted synchronously over all wavelength channels. The packet duration is called a slot. For each slot, the headers 11 for all packets 10 transmitted during that slot are transmitted as a separate optical packet 12 over a separate wavelength channel called control channel λc. Hence, data channels λ1 to λ4 carry optical packets 10 while the control channel λc carries the headers 11 of the packets 10.

On data channels λ1 to λ4, each optical packet 10 is separated from the preceding by an inter-packet guard band 90. On control channel λc, the structure of traffic may be similar to or different from the data channels. Namely, the duration of guard band 91 on the control channel λc may be equal to or different from that of inter-packet guard band 90. Alternatively, the control channel may be implemented as a continuous signal with no guard band at all.

The OPADM nodes 2 to 6 of Fig.1 can insert or add traffic on any wavelength thanks to one or more fast tunable lasers, and can receive or drop traffic on specific wavelengths thanks to reconfigurable burst-mode receivers. The OPADM nodes can also let traffic pass transparently through the node, without a conversion to the electrical domain.

The hub node 9 is a different type of node which converts to electronic all the incoming optical packets on the one side, and fills all slots on all wavelengths with light, i.e. either data packets or dummy packets, on the other side. The hub node 9 can interface with another network 15 in a known manner.

A dummy packet is an optical packet with no meaningful content that is used for physical layer-related purposes, namely keeping power received by the optical amplifiers roughly constant over time.

In the optical packet switching network 1, a first OPADM node, e.g. node 3, can generate an optical packet 10 comprising a payload encapsulating a plurality of data frames having a same format, e.g. data frame coming from one or more client devices 18. At the same time the OPADM node 3 generates control data associated to the optical packet. The generated control data comprises format data indicating the format of the encapsulated data frames. At a destination node, e.g. node 5, the optical packet 10 is received and demodulated to obtain an electrical signal comprising the payload. The associated control data is received and used to configure an electronic switch as a function of the format data, so as to transfer the electrical signal to a selected extraction module adapted to recover the data frames from the electrical signal.

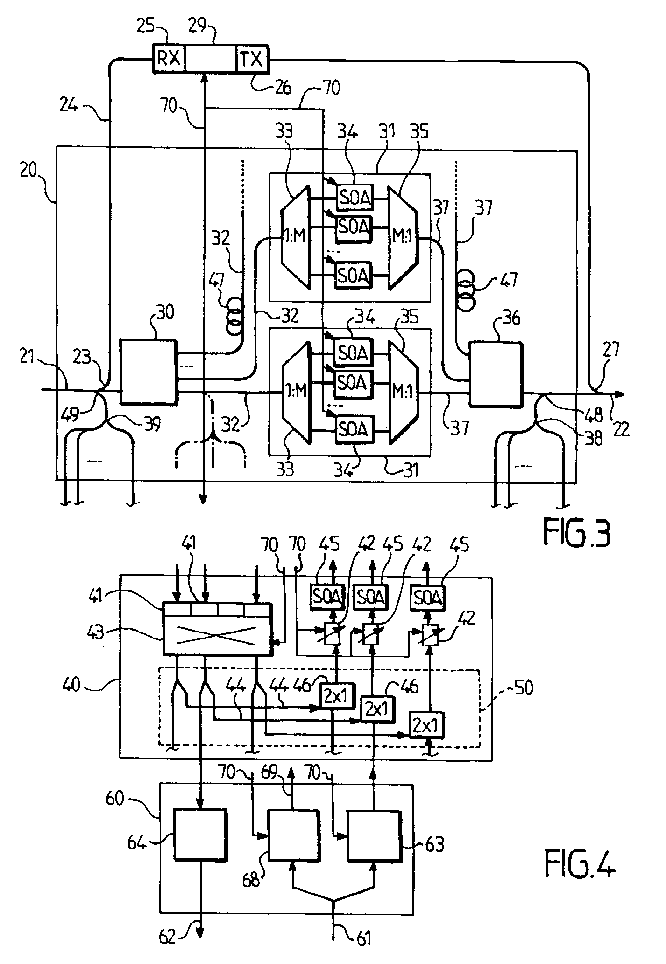

With reference to Figs. 3 and 4, the detailed architecture of an OPADM will now be described. This architecture comprises essentially three building blocks: an optical switching fabric 20 (see Figure 3, also containing the node controller), one or more intermediate linecards 40 (Figure 4, top), and one or more client-layer linecards 60 (Figure 4, bottom).

With reference to Fig. 3, the switching fabric 20 comprises most of the components that operate in the optical domain. An input fiber 21 serves to receive WDM traffic from the nodes located upstream in the ring and an output fiber 22 serves to transmit WDM traffic to the nodes located downstream in the ring.

The control channel is processed as follows: the control channel λc is first extracted from the input fiber 21 using an optical splitter or demultiplexer 23, an optical line 24 and an optical transponder 25 with a wavelength-specific filter. After reception, the demodulated control data is processed by a node controller 29, which serves also to generate the outgoing control packets on the control channel λc using a fixed-wavelength transponder 26. The outgoing control channel is injected through a coupler or multiplexer 27 into the output fiber 22 where it is multiplexed with the outgoing data packets. The control channel is opaque, namely it is submitted to optical-to- electrical and electrical-to-optical conversions at each node.

The data channels are processed as follows: optical packets 10 arrive in the optical input fiber 21, multiplexed over N wavelengths. To improve the node modularity and upgradability, a coarse demultiplexer 30 connected to input fiber 21 splits the spectrum of N wavelengths into K=N/M bands of M wavelengths each, where K, N and M are integer numbers greater than 1. Hence, the N incoming wavelength channels are first band-demultiplexed. Each band of M channels is then sent through an optical line 32 to an integrated optical switching block 31 capable of switching optical packets on each of the M channels independently, and which will be described below.

The integrated optical switching block 31 serves to process transit traffic. The switching block 31 contains a 1:M demultiplexer 33 to separate all M wavelength channels of the band, an array of M SOA gates 34, and an M:1 multiplexer 35. Each SOA gate 34 can be triggered at the packet duration granularity to block a packet or let it pass through. In addition each SOA gate 34 can act as an amplifier so as to equalize power of the packets, which is an operational requirement for the burst-mode receivers which will be described further below. Packets that are allowed to transit are then multiplexed in wavelength through the M:1 multiplexer 35. This design of the switching block 31 enables integration into a PIC, which decreases manufacturing costs and reduces the space footprint of the OPADM node. In addition, the capacity of the node can be upgraded through the addition of such blocks 31.

At the output of the OPADM node, the optical packets coming from the K integrated optical switching blocks 31 through optical lines 37 are multiplexed by a coarse multiplexer 36. The added packets coming from the intermediate linecards 40 are inserted into the output fiber 22 through combiners 38 and 48.

The switching fabric 20 may include some optical buffer mechanisms at different locations in the optical transit path to generate sufficient delay for the control data to be processed while optical data packets are transiting. For example, fiber delay lines 47 may be provided for that purpose on each optical line 37 and/or on each optical line 32 as schematically shown on Figure 2. Such fiber delay lines may also be arranged right before coarse demultiplexer 30 or right after coarse multiplexer 36.

The controller 29 handles synchronization between packets across wavelength channels, insuring that no added packet is inserted at a time and wavelength that conflicts with a transiting packet; and that all time slots cleared out by the optical gates 34 are indeed filled up by an added packet, such that after the coarse multiplexer 36 and combiner 38, there is no space on any wavelength except for those corresponding to inter-packet guard bands 90. At the output of the OPADM node, there is an optical packet in each time slot, on each wavelength channel. When no useful data is available for insertion in a free slot, a dummy packet can be inserted by the add module. Alternatively, the optical packet 10 occupying that slot in the input fiber 21 can be left to transit through the OPADM node, even though the packet is not intended to any downstream node. In such case, the optical packet 10 is also marked as "dummy" on the control channel but it is not physically erased by the SOA gates 34.

Turning to Fig. 4, the modular linecard architecture of the OAPDM node will now be described.

An intermediate linecard 40 contains a pool of P burst-mode optical receivers 41 and a pool of Q optical packet transmitters 42, where P and Q are integer numbers. A plurality of client-layer linecards 60 can be plugged to each intermediate linecard 40, i.e. up to P linecards where P is the number of burst-mode optical receivers 41 in the intermediate linecard 40. Pooling client-layer linecards per groups connected to an intermediate linecard 40 is done to facilitate upgrades and decrease cost at installation time. The role of the intermediate linecard 40 is to provide an interface between the switching fabric 20 and the client-layer linecards to be described next.

For the reception or drop function, the intermediate linecard 40 contains an array of P burst-mode receivers 41. The burst-mode receivers 41 are tunable in wavelength. This can be achieved with a tunable filter for quadratic receivers or with an appropriate electronic control for the local oscillator in coherent receivers. The receivers 41 receive the incoming optical packets from the input fiber 21 through power splitters 49 and 39.

In an embodiment, power splitter 23 that serves to sample the control channel may have a rating of 90/10% whereas power splitter 49 that serves to sample the signal that goes to the drop module may have a rating of 50/50% or 3 dB. The power splitter 39 may be a 1:N splitter to make it possible to drop all channels simultaneously. Alternatively, it could be replaced with a channel demultiplexer to reduce power losses.

Alternatively, the optical signals to be dropped may be sampled at other locations on the transit path, e.g. on each of the optical lines 32 as outlined in dash-dot lines on Figure 3. In that case, the second splitter may be a 1:M power splitter or a 1:M channel demultiplexer for each line 32.

After reception, the demodulated data packets are sent to a PxP electronic switch 43. The role of the switch 43 is to route each data packet payload towards an appropriate client-layer linecard 60, and hence to provide a client-layer protocol demultiplexing function. Indeed, different packets in the OPADM network can contain data from various client-layer protocols. However, a single optical packet contains data from a single client-layer protocol. Since IP packets can be encapsulated natively within optical packets, IP is one of the contemplated client-layer protocols. Other client-layer protocols that can be transported over the optical packet network are in particular Ethernet, SONET/SDH and Frame Relay. The role of the switch 43 is to ensure that each packet payload is sent to an appropriate client-layer linecard 60. Although a single client-layer linecard 60 is shown on figure 4 for the sake of simplicity, multiple client-layer linecards 60 are preferably connected to the output ports of the switch 43, each of them specialized to a specific client-layer protocol.

For the transmission or add function, the intermediate linecard 40 contains P tunable transmitters 42, e.g. fast tunable lasers. The transmitters 42 receive the packet payloads from the client-layer linecards 60 in the electronic domain and send them to the switching fabric 20 in the optical domain. Each transmitter 42 is coupled to an SOA 45 to suppress any transient during the inter-packet guard bands 90. This measure may be necessary because a laser may emit light on intermediate wavelengths while tuning from one wavelength to another.

In an embodiment, as shown at numeral 50, the intermediate linecard 40 may comprise an array of P electric branching connections 44 connecting the output ports of the switch 43 to P 2x1 electronic switches 46. The connections 44 and switches 46 make it possible to immediately re-transmit a demodulated payload to provide functions such as signal regeneration or wavelength conversion. This additional capability improves the resilience of the node in case of the failure of a SOA 34 or of an element of the switching fabric 20. The optional hardware at numeral 50 enables to bypass a failed optical switching block 31 in the switching fabric 20 through the drop and add modules.

A client layer linecard 60 will now be described in more details. The client layer linecard 60 exchanges data frames of a given client-layer protocol with a client device 18 through input port 61 and output port 62. A data frame extraction module 64 is connected to electronic switch 43 and serves to extract the data frames from the demodulated packets. A frame encapsulation module 63 receives data frames of the client-layer protocol through input port 61 and forms a packet payload by aggregating a plurality of the data frames to be transmitted to a same destination in a same optical packet. The packet payload is passed to an optical transmitter 42. At the same time as packet payloads are created, the corresponding headers are generated by a control data generation module 68 and sent to the node controller 29, as shown by arrow 69.

As mentioned, the client data frames may come from several client devices. In that case, the data from several clients is multiplexed appropriately by client layer linecard 60, so that an optical packet may contain data from several client devices all connected to a same OPADM node.

Further functions performed by the client layer linecard 60 include packet classification, mapping of client layer MAC address to OPADM node address, QoS handling, segmentation and reassembly, and aggregation of several client-layer data frames into a single OPADM packet.

Some electronic buffering components not shown may be provided at various locations in the intermediate linecards 40 and client layer linecards 60, e.g. to facilitate the above-mentioned functions.

As shown by arrows 70, the node controller 29 serves to control other components of the node, such as SOA gates 34, electronic switches 43, tunable transmitters 42, frame encapsulation modules 63 and control data generation modules 68.

In particular, the node controller 29 configures the electronic switch 43 at every time slot as a function of the format data obtained from the headers 11 associated to the optical packets 10 being demodulated by the optical packet receivers 41. The switch configuration is computed so that every electrical payload signal resulting from the demodulating is transferred to an extraction module 64 adapted to the client-protocol encapsulated in that payload.

The above-described encapsulation and extraction functions relating to complete data frames may be implemented in the same way with fragments of data frames. Namely, fragments of client data frames may be transported in the optical packets instead of or in addition to complete data frames. For that purpose, the frame encapsulation module 63 may execute a frame fragmentation function and data frame extraction module 64 may execute a frame reassembly function.

The described architecture of the add and drop modules of the OPADM node improves the resilience of the OPDAM node to failure of either an optoelectronic or an electrical component, since it provides optoelectronic components in the intermediate linecards 40 separately from the electronic components in the client layer linecards 60. Further, it is possible to bypass a failed optical switching block 31 in the fabric 20 using branch connections 44 and 2x1 electronic switches 46 in the intermediate linecards 40, without having to resort to higher layer mechanisms.

The described OPADM architecture can be upgraded gradually to increase capacity. Upgrades can be made in at least two ways:
- an upgrade by P drop receivers and P add transmitters by adding an intermediate linecard 40 and one or more client-layer linecards 60, or
- an upgrade by one drop receiver and one add transmitters by connecting one additional client layer linecard 60 to an intermediate linecard 40 that is not fully equipped.

The reconfigurability of the OPADM is enhanced by using optical receivers 41 and transmitters 42 that are wavelength-tunable.

In an illustrative embodiment, an OPADM node can be dimensioned with the following parameters:
Number of wavelength channels: N=40
Number of bands: K=5
Number of channels per band: M=8
Number of receivers per intermediate linecard: P=4
Number of transmitters per intermediate linecard: Q=2.

To implement a multifiber node, a plurality of the above-described OPADM devices may be arranged in a single unit. Some resources may be shared between the multiple OPADM devices, e.g. the node controller 29.

Elements such as the control units could be e.g. hardware means like e.g. an ASIC, or a combination of hardware and software means, e.g. an ASIC and an FPGA, or at least one microprocessor and at least one memory with software modules located therein.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for transmitting data frames in an optical packet switching network comprising:
at a first network node (3), generating an optical packet (10) comprising a payload encapsulating a plurality of data frames or fragments of data frames having a same format and generating control data (11) associated to the optical packet, wherein the control data comprises format data indicating the format of the encapsulated data frames or fragments of data frames,
at a second network node (5), receiving the optical packet (10) and the associated control data (11), demodulating the optical packet to obtain an electrical signal comprising the payload, and configuring an electronic switch (43) as a function of the format data associated to the optical packet to transfer the electrical signal to a selected extraction module (64) adapted to recover the data frames or fragments of data frames from the electrical signal.

2. A method in accordance with claim 1, wherein the frame format is in accordance with a standard protocol selected in the group consisting of all versions of the Internet Protocol, Frame Relay, Ethernet, OTN and SONET/SDH.

3. A method in accordance with claim 1 or 2, further comprising transmitting the optical packet (10) transparently from the first network node (3) to the second network node (5) on a first wavelength channel and transmitting the control data (11) associated to the optical packet from the first network node to the second network node on a second wavelength channel.

4. An optical packet switching node comprising:
an input section (21) for receiving optical packets, each optical packet comprising a payload encapsulating a plurality of data frames or fragments of data frames having a same format,
a controller (29) adapted to receive control data associated to the optical packets, wherein the control data comprises format data indicating the format of the encapsulated data frames or fragments of data frames for each of the optical packets,
an output section (22) for transmitting optical packets,
an optical transit section (20) adapted to pass optical packets from the input section to the output section, and
an optical packet drop section including:
an optical packet receiver (41) connected to the input section (21) and adapted to demodulate an optical packet to obtain an electrical signal comprising the payload,
a plurality of extraction modules (60) adapted to different data frame formats, and
an electronic switch (43) arranged between the optical packet receiver and the plurality of extraction modules,
wherein the electronic switch (43) is configurable by the controller (29) as a function of the format data associated to the optical packet demodulated by the optical packet receiver (41) to transfer the electrical signal to a selected extraction module (60) adapted to recover the data frames or fragments of data frames from the electrical signal.

5. An optical packet switching node in accordance with claim 4, wherein the optical packet receiver (41) and electronic switch (43) are arranged on a first electronic board (40) and the extraction modules are arranged on at least one second electronic board (60).

6. An optical packet switching node in accordance with claim 4 or 5, wherein the input section (21) is adapted to receive the optical packets (10) on a plurality of wavelength channels through a WDM link (7), the optical packet drop section further comprising a plurality of optical packet receivers (41) adapted to demodulate optical packets on different wavelength channels.

7. An optical packet switching node in accordance with one of claims 4 to 6, further comprising an optical packet add section including:
a frame encapsulation module (63) adapted to generate a packet payload encapsulating a plurality of data frames or fragments of data frames having a same format,
and a control data generation module (68) adapted to generate control data associated to the packet payload, wherein the control data comprises format data indicating the format of the encapsulated data frames or fragments of data frames, and
an optical transmitter (42) adapted to transmit an optical packet comprising the packet payload to the output section.

8. An optical packet switching node in accordance with claim 7, further comprising an electrical connection (44) adapted to pass a packet payload from the optical packet drop section to the optical transmitter (42) of the optical packet add section.

9. An optical packet switching node in accordance with claim 8, wherein the electrical connection comprises a switch (46) having a first input connected to the electronic switch (43) of the optical packet drop section and a second input connected to the frame encapsulation module (63) of the optical packet add section.

10. An optical packet switching node in accordance with claim 9, wherein the output section (22) is adapted to transmit the optical packets on a plurality of wavelength channels through a WDM link (7), the optical packet add section further comprising a plurality of optical packet transmitters (42) adapted to generate optical packets on different wavelength channels.

11. An optical packet switching node in accordance with one of claims 4 to 10, wherein the optical transit section comprises:
a coarse demultiplexer (30) connected to the input section and adapted to separate the wavelength channels carrying the optical packets into a plurality of spectral groups,
for at least one of the spectral groups, a fine wavelength demultiplexer (33) adapted to pass the respective wavelength channels of the corresponding spectral group to respective transit paths, a selective element (34) cooperating with each transit path and switchable to selectively pass or block an individual optical packet carried on the corresponding wavelength channel,
optical combiners (35, 36) adapted to recombine the optical packets passed by the selective elements on the respective wavelength channels.

12. An optical packet switching node in accordance with claim 11, wherein the optical transit section further comprises:
a plurality of packet switching blocks (31) connected to the coarse demultiplexer, each packet switching block being associated to one of the spectral groups and comprising the fine demultiplexer (33) with the associated transit paths and selective elements (34) and a fine wavelength multiplexer (35) adapted to recombine the wavelength channels of the spectral group,
the optical combiners comprising a coarse multiplexer (36) arranged between the packet switching blocks and the output section and adapted to recombine the spectral groups.

13. An optical packet switching node in accordance with claim 12, wherein a packet switching block (31) consists of a single photonic integrated circuit.

14. An optical packet switching node in accordance with one of claims 11 to 13, wherein the selective element (34) comprises a semiconductor optical amplifier arranged as an optical gate on the corresponding transit path.

15. An optical packet switching node in accordance with one of claims 4 to 14, further comprising an optical receiver (25) connected to the input section (21) for receiving a control wavelength channel and demodulating the control data associated to the optical packets from the control wavelength channel.

## Patentansprüche

1. Verfahren zur Übertragung von Datenrahmen in einem optischen paketvermittelten Netzwerk, umfassend:
An einem ersten Netzwerkknoten (3), Erzeugen eines optischen Pakets (10) mit Nutzdaten, welche eine Vielzahl von Datenrahmen oder Datenrahmenfragmenten mit einem selben Format einkapseln, und Erzeugen von mit dem optischen Paket assoziierten Steuerdaten (11), wobei die Steuerdaten Formatdaten umfassen, die das Format der eingekapselten Datenrahmen oder Datenrahmenfragmente angeben,
an einem zweiten Netzwerkknoten (5), Empfangen des optischen Pakets (10) und der assoziierten Steuerdaten (11), Demodulierten des optischen Pakets, um ein elektrisches Signal mit den Nutzdaten zu erhalten, und Konfigurieren eines elektronischen Schalters (43) in Abhängigkeit von den mit dem optischen Paket assoziierten Formatdaten, um das elektrische Signal an ein ausgewähltes Extraktionsmodul (64), welches dazu ausgelegt ist, die Datenrahmen oder Datenrahmenfragmente aus dem elektrischen Signals rückzugewinnen, zu übermitteln.

2. Verfahren nach Anspruch 1, wobei das Rahmenformat einem in der Gruppe bestehend aus allen Versionen des Internet Protokolls, Frame Relay, Ethernet, OTN und SONET/DSH ausgewählten Standardprotokoll entspricht.

3. Verfahren nach Anspruch 1 oder 2, weiterhin umfassend das transparente Übertragen des optischen Pakets (10) von dem ersten Netzwerkknoten (3) an den zweiten Netzwerkknoten (5) auf einem ersten Wellenlängenkanal, und das Übertragen der mit dem optischen Paket assoziierten Steuerdaten (11) von dem ersten Netzwerkknoten an den zweiten Netzwerkknoten auf einem zweiten Wellenlängenkanal.

4. Optischer Paketvermittlungsknoten, umfassend:
Einen Eingangsabschnitt (21) für den Empfang von optischen Paketen, wobei jedes optische Paket Nutzdaten, welche eine Vielzahl von Datenrahmen oder Datenrahmenfragmenten mit einem selben Format einkapseln, enthält,
einen Controller (29), welcher für den Empfang von mit den optischen Paketen assoziierten Steuerdaten ausgelegt ist, wobei die Steuerdaten Formatdaten umfassen, die das Format der eingekapselten Datenrahmen oder Datenrahmenfragmente für ein jedes der optischen Pakete angeben,
einen Ausgangsabschnitt (22) für die Übertragung von optischen Paketen,
einen optischen Transitabschnitt (20), dazu ausgelegt, optische Pakete von dem Eingangsabschnitt an den Ausgangsabschnitt zu leiten, und
einen optischen Paket-Drop-Abschnitt, umfassend:
eine optische Paketempfangsvorrichtung (41), welche an den Eingangsabschnitt (21) angeschlossen und dazu ausgelegt ist, ein optisches Paket zu demodulieren, um ein elektrisches Signal mit den Nutzdaten zu erhalten,
eine Vielzahl von Extraktionsmodulen (60), welche für unterschiedliche Datenrahmenformate geeignet sind, und
einen elektronischen Schalter (43), welcher zwischen der optischen Paketempfangsvorrichtung und der Vielzahl von Extraktionsmodulen angeordnet ist,
wobei der elektronische Schalter (43) durch den Controller (29) in Abhängigkeit von den mit dem von der optischen Paketempfangsvorrichtung (41) demodulierten optischen Paket assoziierten Formatdaten konfigurierbar ist, um das elektrische Signal man ein ausgewähltes Extraktionsmodul (60), welches fähig ist, die Datenrahmen oder Datenrahmenfragmente aus dem elektrischen Signal rückzugewinnen, zu übermitteln.

5. Optischer Paketvermittlungsknoten nach Anspruch 4, wobei die optische Paketempfangsvorrichtung (41) und der elektronische Schalter (43) auf einer ersten Elektronikplatine (40) und die Extraktionsmodule auf mindestens einer zweiten Elektronikplatine (60) angeordnet sind.

6. Optischer Paketvermittlungsknoten nach Anspruch 4 oder 5, wobei der Eingangsabschnitt (21) für den Empfang der optischen Pakete (10) auf einer Vielzahl von Wellenlängenkanälen über eine WDM-Verbindung (7) ausgelegt ist, wobei der optische Paket-Drop-Abschnitt weiterhin eine Vielzahl von optischen Paketempfangsvorrichtungen (41), welche für das Demodulieren von optischen Paketen auf unterschiedlichen Wellenlängenkanälen ausgelegt sind, umfasst.

7. Optischer Paketvermittlungsknoten nach einem der Ansprüche 4 bis 6, weiterhin umfassend einen optischen Paket-Add-Abschnitt, einschließlich:
Ein Rahmeneinkapselungsmodul (63), welches für das Erzeugen von Paketnutzdaten, die eine Vielzahl von Datenrahmen oder Datenrahmenfragmenten mit einem selben Format einkapseln, ausgelegt ist,
und ein Steuerdatenerzeugungsmodul (68), welches für das Erzeugen von mit den Paketnutzdaten assoziierten Steuerdaten ausgelegt ist, wobei die Steuerdaten Formatdaten, welche das Format der eingekapselten Datenrahmen oder Datenrahmenfragmente angeben, umfassen,
eine optische Sendevorrichtung (42), welche für das Übertragen eines optischen Pakets mit den Paketnutzdaten an den Ausgangsabschnitt ausgelegt ist.

8. Optischer Paketvermittlungsknoten nach Anspruch 7, weiterhin umfassend eine elektrische Verbindung (44), welche dazu ausgelegt ist, Paketnutzdaten von dem optischen Paket-Drop-Abschnitt an die optische Sendevorrichtung (42) des optischen Paket-Add-Abschnitts zu leiten.

9. Optischer Paketvermittlungsknoten nach Anspruch 8, wobei die elektrische Verbindung einen Schalter (46) mit einem ersten Eingang, der an den elektronischen Schalter (43) des optischen Paket-Drop-Abschnitts angeschlossen ist, und einem zweiten Eingang, der an das Rahmeneinkapselungsmodul (63) des optischen Paket-Add-Abschnitts angeschlossen ist, umfasst.

10. Optischer Paketvermittlungsknoten nach Anspruch 9, wobei der Ausgangsabschnitt (22) dazu ausgelegt ist, die optischen Pakete auf einer Vielzahl von Wellenlängenkanälen über eine WDM-Verbindung (7) zu übertragen, wobei der optische Paket-Add-Abschnitt weiterhin eine Vielzahl von optischen Paketsendevorrichtungen (42) umfasst, welche für das Erzeugen von optischen Paketen auf unterschiedlichen Wellenlängenkanälen ausgelegt sind.

11. Optischer Paketvermittlungsknoten nach einem der Ansprüche 4 bis 10, wobei der optische Transitabschnitt umfasst:
Einen Grob-Demultiplexer (30), welcher an den Eingangsabschnitt angeschlossen und dazu ausgelegt ist, die Wellenlängenkanäle, welche die optischen Pakete transportieren, in eine Vielzahl von Spektralgruppen zu trennen,
für mindestens eine der Spektralgruppen, einen Wellenlängen-Fein-Demultiplexer (33), welcher dazu ausgelegt ist, die jeweiligen Wellenlängenkanäle der entsprechenden Spektralgruppe an jeweilige Transitpfade zu leiten, wobei ein selektives Element (34) mit jedem Transitpfad zusammenwirkt und schaltbar ist, um ein einzelnes auf dem entsprechenden Wellenlängenkanal transportiertes optisches Paket weiterzuleiten oder zu blockieren,
optische Kombinatoren (35, 36), welche dazu ausgelegt sind, die durch die selektiven Elemente auf den jeweiligen Wellenlängenkanälen weitergeleiteten optischen Pakete zu rekombinieren.

12. Optischer Paketvermittlungsknoten nach Anspruch 11, wobei der optische Transitabschnitt weiterhin umfasst:
Eine Vielzahl von Paketvermittlungsblöcken (31), welche an den Grob-Demultiplexer angeschlossen sind, wobei jeder Paketvermittlungsblock mit einer der Spektralgruppen assoziiert ist und den Fein-Demultiplexer (33) mit den assoziierten Transitpfaden und selektive Elemente (34) und einen Wellenlängen-Fein-Multiplexer (35), welcher für das Rekombinieren der Wellenlängenkanäle der Spektralgruppe ausgelegt ist, umfasst,
die optischen Kombinatoren, welche einen Grob-Multiplexer (36) umfassen, der zwischen den Paketvermittlungsblöcken und dem Ausgangsabschnitt angeordnet und für das Rekombinieren der Spektralgruppen ausgelegt ist.

13. Optischer Paketvermittlungsknoten nach Anspruch 12, wobei ein Paketvermittlungsblock (31) aus einer einzelnen photonischen integrierten Schaltung besteht.

14. Optischer Paketvermittlungsknoten nach einem der Ansprüche 11 bis 13, wobei das selektive Element (34) einen optischen Halbleiterverstärker umfasst, welcher als ein optisches Tor auf dem entsprechenden Transitpfad angeordnet ist.

15. Optischer Paketvermittlungsknoten nach einem der Ansprüche 4 bis 14, weiterhin umfassend einen optischen Empfänger (25), welcher an den Eingangsabschnitt (21) angeschlossen ist, für den Empfang eines Wellenlängen-Steuerkanals und zum Demodulierten der mit den optischen Paketen von dem Steuerwellenlängenkanal assoziierten Steuerdaten.

## Revendications

1. Procédé de transmission de trames de données dans un réseau de commutation de paquets optiques comprenant les étapes suivantes :
au niveau d'un premier noeud de réseau (3), générer un paquet optique (10) comprenant une charge utile encapsulant une pluralité de trames de données ou de fragments de trames de données ayant un même format et générer des données de contrôle (11) associées au paquet optique, dans lequel les données de contrôle comprennent des données de format indiquant le format des trames de données ou des fragments de trames de données encapsulés,
au niveau d'un deuxième noeud de réseau (5), recevoir le paquet optique (10) et les données de contrôle (11) associées, démoduler le paquet optique pour obtenir un signal électrique comprenant la charge utile, et configurer un commutateur électronique (43) en fonction des données de format associées au paquet optique pour transférer le signal électrique vers un module d'extraction (64) sélectionné adapté pour récupérer les trames de données ou des fragments de trames de données à partir du signal électrique.

2. Procédé selon la revendication 1, dans lequel le format de trame est conforme à un protocole standard sélectionné dans le groupe constitué de toutes les versions du protocole Internet, du relais de trames, de l'Ethernet et des réseaux de transport OTN et SONET/SDH.

3. Procédé selon la revendication 1 ou 2, comprenant en outre la transmission du paquet optique (10) de manière transparente à partir du premier noeud de réseau (3) vers le deuxième noeud de réseau (5) sur un premier canal de longueur d'onde et la transmission des données de contrôle (11) associées au paquet optique à partir du premier noeud de réseau vers le deuxième noeud de réseau sur un deuxième canal de longueur d'onde.

4. Noeud de commutation de paquets optiques comprenant :
une section d'entrée (21) pour recevoir des paquets optiques, chaque paquet optique comprenant une charge utile encapsulant une pluralité de trames de données ou de fragments de trames de données ayant un même format,
un dispositif de contrôle (29) adapté pour recevoir des données de contrôle associées aux paquets optiques, dans lequel les données de contrôle comprennent des données de format indiquant le format des trames de données ou des fragments de trames de données encapsulés pour chacun des paquets optiques,
une section de sortie (22) pour transmettre des paquets optiques,
une section de transit optique (20) adaptée pour acheminer des paquets optiques à partir de la section d'entrée vers la section de sortie, et
une section d'extraction de paquets optiques comprenant :
un récepteur de paquets optiques (41) connecté à la section d'entrée (21) et adapté pour démoduler un paquet optique afin d'obtenir un signal électrique comprenant la charge utile,
une pluralité de modules d'extraction (60) adaptés à différents formats de trames de données, et
un commutateur électronique (43) disposé entre le récepteur de paquets optiques et la pluralité de modules d'extraction,
dans lequel le commutateur électronique (43) peut être configuré par le dispositif de contrôle (29) en fonction des données de format associées au paquet optique démodulé par le récepteur de paquets optiques (41) pour transférer le signal électrique vers un module d'extraction (60) sélectionné adapté pour récupérer les trames de données ou des fragments de trames de données à partir du signal électrique.

5. Noeud de commutation de paquets optiques selon la revendication 4, dans lequel le récepteur de paquets optiques (41) et le commutateur électronique (43) sont disposés sur une première carte électronique (40) et les modules d'extraction sont disposés sur au moins une deuxième carte électronique (60).

6. Noeud de commutation de paquets optiques selon la revendication 4 ou 5, dans lequel la section d'entrée (21) est adaptée pour recevoir les paquets optiques (10) sur une pluralité de canaux de longueur d'onde par l'intermédiaire d'une liaison MRL (7), la section d'extraction de paquets optiques comprenant en outre une pluralité de récepteurs de paquets optiques (41) adaptés pour démoduler des paquets optiques sur différents canaux de longueur d'onde.

7. Noeud de commutation de paquets optiques selon l'une des revendications 4 à 6, comprenant en outre une section d'insertion de paquets optiques comprenant :
un module d'encapsulation de trames (63) adapté pour générer une charge utile de paquet encapsulant une pluralité de trames de données ou de fragments de trames de données ayant un même format,
et un module de génération de données de contrôle (68) adapté pour générer des données de contrôle associées à la charge utile de paquet, dans lequel les données de contrôle comprennent des données de format indiquant le format des trames de données ou des fragments de trames de données encapsulés, et
un émetteur optique (42) adapté pour transmettre un paquet optique comprenant la charge utile de paquet vers la section de sortie.

8. Noeud de commutation de paquets optiques selon la revendication 7, comprenant en outre une connexion électrique (44) adaptée pour acheminer une charge utile de paquet à partir de la section d'extraction de paquets optiques vers l'émetteur optique (42) de la section d'insertion de paquets optiques.

9. Noeud de commutation de paquets optiques selon la revendication 8, dans lequel la connexion électrique comprend un commutateur (46) présentant une première entrée connectée au commutateur électronique (43) de la section d'extraction de paquets optiques et une deuxième entrée connectée au module d'encapsulation de trames (63) de la section d'insertion de paquets optiques.

10. Noeud de commutation de paquets optiques selon la revendication 9, dans lequel la section de sortie (22) est adaptée pour transmettre les paquets optiques sur une pluralité de canaux de longueur d'onde par l'intermédiaire d'une liaison MRL (7), la section d'insertion de paquets optiques comprenant en outre une pluralité d'émetteurs de paquets optiques (42) adaptés pour générer des paquets optiques sur différents canaux de longueur d'onde.

11. Noeud de commutation de paquets optiques selon l'une des revendications 4 à 10, dans lequel la section de transit optique comprend :
un démultiplexeur grossier (30) connecté à la section d'entrée et adapté pour séparer les canaux de longueur d'onde transportant les paquets optiques en une pluralité de groupes spectraux,
pour au moins un des groupes spectraux, un démultiplexeur de longueur d'onde fin (33) adapté pour acheminer les canaux de longueur d'onde respectifs du groupe spectral correspondant vers des chemins de transit respectifs, un élément sélectif (34) coopérant avec chaque chemin de transit et pouvant commuter pour acheminer ou bloquer sélectivement un paquet optique individuel transporté sur le canal de longueur d'onde correspondant,
des combineurs optiques (35, 36) adaptés pour recombiner les paquets optiques acheminés par les éléments sélectifs sur les canaux de longueur d'onde respectifs.

12. Noeud de commutation de paquets optiques selon la revendication 11, dans lequel la section de transit optique comprend en outre :
une pluralité de blocs de commutation de paquets (31) connectés au démultiplexeur grossier, chaque bloc de commutation de paquets étant associé à un des groupes spectraux et comprenant le démultiplexeur fin (33) avec les chemins de transit et les éléments sélectifs (34) associés et un multiplexer de longueur d'onde fin (35) adapté pour recombiner les canaux de longueur d'onde du groupe spectral,
les combineurs optiques comprenant un multiplexeur grossier (36) disposé entre les blocs de commutation de paquets et la section de sortie et adapté pour recombiner les groupes spectraux.

13. Noeud de commutation de paquets optiques selon la revendication 12, dans lequel un bloc de commutation de paquets (31) est constitué d'un circuit intégré photonique unique.

14. Noeud de commutation de paquets optiques selon l'une des revendications 11 à 13, dans lequel l'élément sélectif (34) comprend un amplificateur optique à semiconducteurs disposé comme une porte optique sur le chemin de transit correspondant.

15. Noeud de commutation de paquets optiques selon l'une des revendications 4 à 14, comprenant en outre un récepteur optique (25) connecté à la section d'entrée (21) pour recevoir un canal de longueur d'onde de commande et démoduler les données de contrôle associées aux paquets optiques à partir du canal de longueur d'onde de commande.
